Europäisches Patentamt

European Patent Office

Office européen des brevets

(19)

(11) Veröffentlichungsnummer: **0 075 700**
**A2**

(12) **EUROPÄISCHE PATENTANMELDUNG**

(21) Anmeldenummer: **82107327.7**

(22) Anmeldetag: **12.08.82**

(51) Int. Cl.³: **G 02 F 1/33**

(30) Priorität: **29.09.81 DE 3138745**

(43) Veröffentlichungstag der Anmeldung:
**06.04.83 Patentblatt 83/14**

(84) Benannte Vertragsstaaten:
**FR GB**

(71) Anmelder: **SIEMENS AKTIENGESELLSCHAFT**
**Berlin und München Wittelsbacherplatz 2**
**D-8000 München 2(DE)**

(72) Erfinder: **Auracher, Franz, Dr. Dipl.-Ing.**
**Eichenstrasse 26**
**D-8021 Baierbrunn(DE)**

(72) Erfinder: **Keil, Rudolf, Dipl.-Ing.**
**Weitlstrasse 58**
**D-8000 München 45(DE)**

(72) Erfinder: **Stockmann, Michael, Dipl.-Ing.**
**Plievierpark 10**
**D-8000 München 83(DE)**

(72) Erfinder: **Zeitler, Karl-Heinz**
**Oertlinweg 1**
**D-8000 München 90(DE)**

(54) **Akustooptischer Lichtablenker mit hoher Auflösung.**

(57) Es wird ein Lichtablenker beschrieben, bei dem mehrere akustooptische Wellenleiter-Lichtablenker (Einzelablenker) auf einem Substrat integriert und relativ zu einer oder mehreren Richtungen, aus der oder denen die abzulenkenden Lichtstrahlen zuzuführen sind, so angeordnet oder auch so ausgerichtet sind, daß die Ablenkbereiche in einer vorgegebenen Fläche lückenlos nebeneinander liegen. Wenn N Einzelablenker integriert sind, so können N mal so viele Punkte aufgelöst werden, wie mit einem Einzelablenker.

FIG 1

0075700

SIEMENS AKTIENGESELLSCHAFT          Unser Zeichen
Berlin und München                 VPA
                                    81 P 7 1 4 0 E

Akustooptischer Lichtablenker mit hoher Auflösung

Die Erfindung bezieht sich auf einen akustooptischen Lichtablenker mit hoher Auflösung.

Für viele Anwendungen, beispielsweise für Laserdrucker, werden Lichtablenker benötigt, die mehrere hundert bis zu einige tausend Punkte auflösen können. Derartig hohe Auflösung wird derzeit nur mit mechanischen Ablenkern, beispielsweise mit rotierenden Polygonspiegeln oder Schwingspiegeln, erreicht, die zwar einen sehr hohen Ablenkwirkungsgrad haben, aber relativ langsam sind. Schnelle Ablenker mit bis zu tausend aufgelösten Punkten, aber nur kleinem Ablenkwirkungsgrad können mit Ultraschallablenkern in sogenannter "Bulk"-Ausführung realisiert werden. Beide Ablenker sind aber relativ teuer in ihrer Herstellung. Schnelle Ablenker in Wellenleiterausführung hätten den Vorteil, daß sie einfacher herstellbar sind (breitbandige Wandler können in üblicher Planartechnik fotolithografisch hergestellt werden) und mit wesentlich weniger Hochfrequenz-Ansteuerleistung auskommen als Volumenablenker. Mit planaren akustooptischen Lichtablenkern können derzeit höchstens einige hundert Punkte aufgelöst werden.

Die Aufgabe der Erfindung besteht darin, einen für Laserstrahlen geeigneten Lichtablenker der genannten Art zu schaffen, der schnell ist und in Planartechnologie herstellbar ist, und der sehr viele Punkte auflösen kann.

Diese Aufgabe wird durch einen Lichtablenker der genannten Art gelöst, der die im kennzeichnenden Teil des

Ed 1 Sti/25.9.1981

Patentanspruchs 1 angegebenen Merkmale aufweist.

Eine besonders bevorzugte Ausführungsform eines derartigen Lichtablenkers ist im Anspruch 2 angegeben.

Bevorzugte und vorteilhafte Ausführungsformen dieses Lichtablenkers gehen aus den weiteren Unteransprüchen hervor.

Die Erfindung wird anhand der Figuren in der folgenden Beschreibung näher erläutert. Von den Figuren zeigen:

Figur 1 eine Ausführungsform eines Lichtablenkers gemäß Anspruch 3, bei dem die von den Einzelablenkern abzulenkenden Lichtstrahlen durch Strahlablenker nacheinander oder gleichzeitig zugeführt werden,

Figur 2 eine Ausführungsform eines Lichtablenkers gemäß Anspruch 3, bei dem Strahlablenker oder Reflektoren in den Ablenkbereichen der Einzelablenker angeordnet sind,

Figur 3 eine der Ausführungsform gemäß Figur 2 ähnliche Ausführungsform eines Lichtablenkers gemäß Anspruch 3 und

Figur 4 eine Ausführungsform eines Lichtablenkers gemäß Anspruch 3, bei der die in den Ablenkbereichen der Einzelablenker angeordneten Strahlablenker oder Reflektoren durch brechende Flächen realisiert sind.

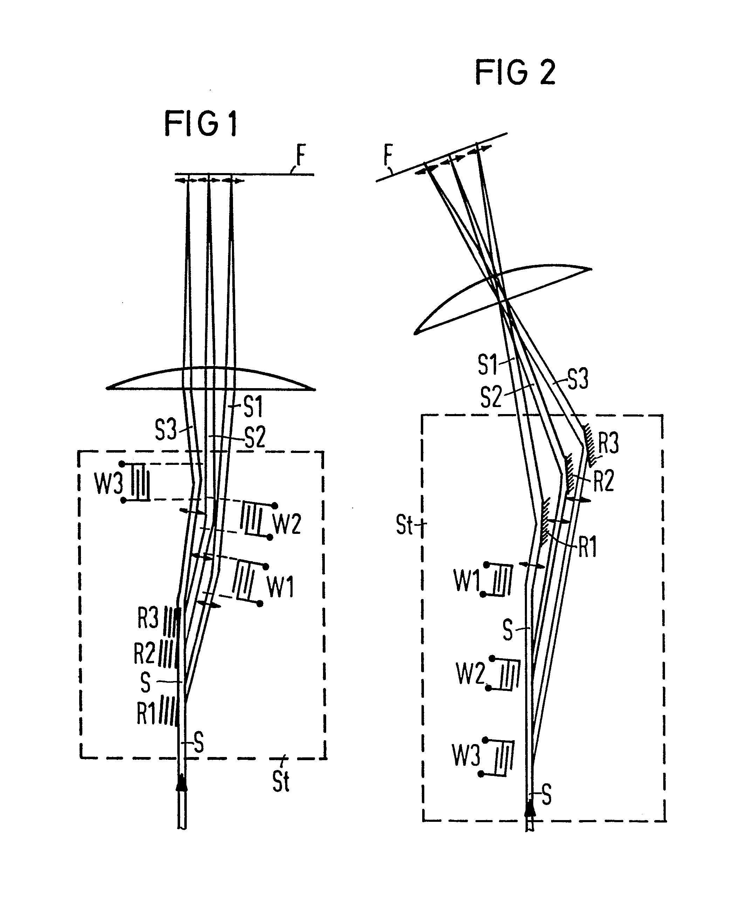

Bei der in der Figur 1 gezeigten Ausführungsform kann der zugeführte Lichtstrahl S durch N (= 3) in das Substrat St integrierte Reflektoren R1 bis R3 in drei unterschiedliche Richtungen umgelenkt werden. Für jede Strahlrichtung ist ein Einzelablenker vorhanden, der schematisch durch ein auf das Substrat aufgebrachtes Gitter eines Schallwandlers W1 bis W3 repräsentiert ist, und der den ihm zugeordneten Strahl in m Positionen ablenken kann, wodurch der Ablenkbereich festgelegt ist. Die Einzelablenker sind so angeordnet und relativ zu den ihnen zugeführten abzulenkenden Strahlen ausgerichtet, daß die Ablenkbereiche der einzelnen Lichtablenker, d.h. die Bereiche,die die von den Einzelablenkern abgelenkten Strahlen S1 bis S3 überstreichen, auf einer bestimmten Fläche lückenlos aneinandergrenzen. Diese Fläche ist beispielsweise durch die Schreibfläche F eines Laserdruckers bestimmt. Die Reflektoren können so dimensioniert sein, daß jeweils der 1/N-fache Teil der gesamten Lichtleistung abgelenkt wird, oder es können steuerbare Gitter sein, die zeitlich nacheinander möglichst die gesamte Lichtleistung in Richtung der Einzelablenker ablenken. Im ersten Fall können die Schallwandler W1 bis W3 gleichzeitig angesteuert werden, und somit gleichzeitig N Ablenkbereiche geschrieben werden. Im zweiten Fall werden die Wandler W1 bis W3 synchron mit den Gittern R1 bis R3 zeitlich nacheinander angesteuert.

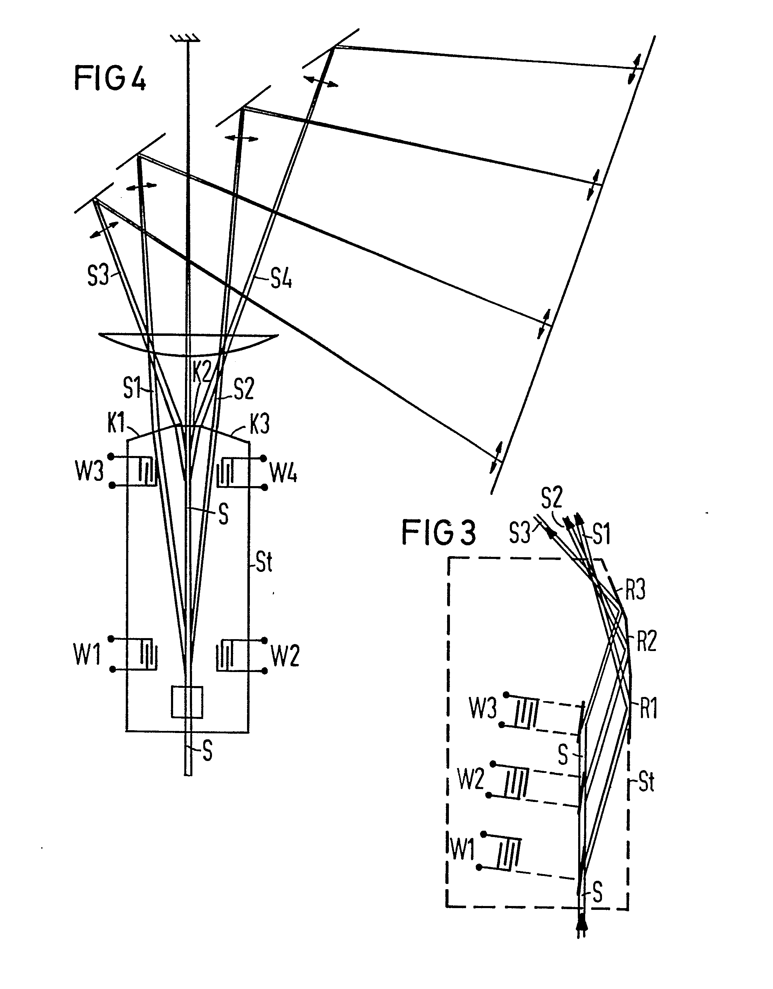

Bei der in der Figur 2 dargestellten Ausführungsform sind die Strahlablenker oder Reflektoren und die Einzelablenker gegenüber der Ausführungsform gemäß der Figur 1 vertauscht. Bei beiden Ausführungsformen kann man gleichartige Schallwandler W1 bis W3 für die Einzelablenker verwenden, lediglich die in den Ablenkbereichen angeordneten Reflektoren R1 bis R3 müssen für unterschiedliche Einfallswinkel des abgelenkten Strahls ausgelegt sein. Als Reflektor kann z. B. ein Gitter, vorzugsweise ein Brechzahlgitter oder Oberflächengitter, verwendet werden. Das Gitter kann fest, beispielsweise durch Diffusion eines Metallgitters, Ionenimplantation oder Ätzen der Oberfläche erzeugt werden, oder es kann ein steuerbares Gitter verwendet werden. Dies ist beispielsweise in elektrooptischen Materialien, wie beispielsweise Lithiumniobat, durch Anlegen einer Gleichspannung an eine gitterförmige Elektrodenstruktur oder durch Anregen einer Oberflächenschallwelle möglich. Im letzteren Fall kann der Ablenkwinkel durch Abstimmen der Schallfrequenz nachgetrimmt werden. Anstelle eines Gitters kann auch ein fester Brechzahlsprung im Wellenleiter, beispielsweise durch Eindiffusion von Titan in Lithiumniobat oder durch Ionenimplantation, erzeugt werden oder elektrooptisch über Elektroden induziert werden. Dies ist jedoch nur bei Einfallswinkeln des Lichts auf den Reflektor möglich, die nahe dem Grenzwinkel der Totalreflexion liegen. Ebenso können die Reflektoren durch entsprechendes Anschleifen und, falls nötig, durch Verspiegeln der Kristallkanten hergestellt werden. Eine derartige Ausführungsform ist in der Figur 3 angedeutet.

In der Figur 4 ist eine Ausführungsform dargestellt, bei der die durch Schallwandler W1 bis W4 angedeuteten Einzelablenker nicht wie bei den Ausführungsformen gemäß den Figuren 2 und 3, nur hintereinander im zugeführten Lichtstrahl S angeordnet sind, sondern auch nebeneinander oder überlagert. Die beiden Schallwandler W1 und W2 spalten von dem zugeführten Strahl S zwei erste abgelenkte Lichtstrahlen ab, während die im Strahlengang der darauffolgenden Wandler W3 und W4 von dem zugeführten Lichtstrahl S zwei weitere abgelenkte Lichtstrahlen abspalten. Sämtliche abgespaltenen Lichtstrahlen werden auch nicht durch Reflexion, sondern durch Brechung an unterschiedlich geneigten Kristallflächen K1 bis K3 abgelenkt und es entstehen aus den ersten abgelenkten Strahlen die abgelenkten Strahlen S1 und S2 und aus den weiteren abgelenkten Strahlen die abgelenkten Strahlen S3 und S4. Die Kristallflächen K1, K2 und K3 entsprechen in ihrer Wirkungsweise den Reflektoren R1 bis R3.

Die vorgeschlagenen Lichtablenker weisen den Vorteil auf, daß die N Wandler im gleichen Fotolithografie-Prozeß hergestellt werden können und sich somit kein wesentlicher Mehraufwand gegenüber den einfacheren Einzelablenkern ergibt. Bei N integrierten Einzelablenkern wird gegenüber einem Einzelablenker die N-fache Punktzahl erreicht. Da bei Einzelablenkern derzeit die Zahl der aufgelösten Punkte bei einigen hundert liegt, können tausend Punkte oder gar zweitausend Punkte, wie sie beim typischen Beispiel des Laserdruckers in einer Zeile geschrieben werden können, durchaus erreicht werden.

13 Patentansprüche
4 Figuren

Patentansprüche

1. Akustooptischer Lichtablenker mit hoher Auflösung, d a d u r c h   g e k e n n z e i c h n e t ,   daß mehrere akustooptische Wellenleiter-Lichtablenker (Einzelablenker) auf einem gemeinsamen Substrat derart integriert sind, daß die Zahl der aufgelösten Punkte gleich der Summe der aufgelösten Punkte der Einzelablenker ist.

2. Lichtablenker nach Anspruch 1, d a d u r c h   g e k e n n z e i c h n e t ,   daß die Einzelablenker relativ zu einer oder mehreren Richtungen, aus der oder denen der oder die abzulenkenden Lichtstrahlen zuzuführen sind, so angeordnet oder auch ausgerichtet sind, daß die Ablenkbereiche in einer vorgegebenen Fläche nebeneinander liegen und sich berühren.

3. Lichtablenker nach Anspruch 2, d a d u r c h   g e k e n n z e i c h n e t ,   daß Strahlablenker oder Reflektoren vorgesehen sind, die in einem zugeführten Lichtstrahl hintereinander angordnet sind und von denen jeder den zugeführten Strahl oder einen Teilstrahl aus dem zugeführten Strahl zu einem zugeordneten Einzelablenker hin umlenkt, oder von denen jeder in einem Ablenkbereich eines zugeordneten der ihm zugeführten Strahl hintereinander oder auch nebeneinander oder überlagert angeordneten Einzelablenker angeordnet ist und den ihm zugeführten abgelenkten Lichtstrahl zur vorgegebenen Fläche umlenkt.

4. Lichtablenker nach Anspruch 3, d a d u r c h   g e k e n n z e i c h n e t ,   daß die in dem zugeführten Strahl hintereinander angeordneten Strahlablenker oder Reflektoren so dimensioniert sind, daß jeder nur einen Teil der Lichtleistung ablenkt, oder daß sie aus steuerbaren Gittern bestehen, die zeitlich nacheinander jeweils möglichst die gesamte zugeführte Lichtleistung umlenken.

5. Lichtablenker nach Anspruch 3, d a d u r c h g e k e n n z e i c h n e t , daß ein in einem Ablenkbereich eines Einzelablenkers angeordneter Strahlablenker oder Reflektor aus einem Gitter besteht.

6. Lichtablenker nach Anspruch 5, d a d u r c h g e k e n n z e i c h n e t , daß das Gitter ein Brechzahlgitter oder auch Oberflächengitter ist.

7. Lichtablenker nach Anspruch 6, d a d u r c h g e k e n n z e i c h n e t , daß das Gitter ein festes oder ein steuerbares Gitter ist.

8. Lichtablenker nach Anspruch 7, d a d u r c h g e k e n n z e i c h n e t , daß das feste Gitter ein durch Diffusion eines Metallgitters, Ionenimplantation oder Ätzen der Oberfläche erzeugtes Gitter ist.

9. Lichtablenker nach einem der Ansprüche 4 bis 8, d a d u r c h g e k e n n z e i c h n e t , daß ein steuerbares Gitter ein in elektrooptischen Materialien durch Anlegen einer Gleichspannung an eine gitterförmige Elektrodenstruktur oder durch Anregen einer Oberflächenschallwelle erzeugtes Gitter ist.

10. Lichtablenker nach einem der Ansprüche 3 bis 9, d a d u r c h g e k e n n z e i c h n e t , daß ein Strahlablenker oder Reflektor durch einen Brechzahlsprung in einem Wellenleiter gegeben ist.

11. Lichtablenker nach Anspruch 10, d a d u r c h g e k e n n z e i c h n e t , daß der Brechzahlsprung durch Eindiffusion oder Ionenimplantation eines Stoffes in den Wellenleiter erzeugt oder elektrooptisch über Elektroden induziert ist.

12. Lichtablenker nach Anspruch 3, d a d u r c h g e k e n n z e i c h n e t , daß ein in einem Ablenkbereich eines Einzelablenkers angeordneter Reflektor ein durch Anschleifen und auch Verspiegeln einer Kristallkante erzeugter Reflektor ist.

13. Lichtablenker nach Anspruch 3 oder nach Anspruch 3 und einem oder einer Kombination der Ansprüche 5 bis 11, d a d u r c h g e k e n n z e i c h n e t , daß ein in einem Ablenkbereich eines Einzelablenkers angeordneter Reflektor ein durch Anschleifen und auch Verspiegeln einer Kristallkante erzeugter Reflektor ist, oder daß ein in einem Ablenkbereich eines Einzelablenkers angeordneter Strahlablenker aus einer brechenden Kristallfläche (K1, K2, K3) besteht.

0075700

FIG 1

FIG 2

0075700

FIG 4

S3

S4

K2

S1

S2

K1

K3

W3

W4

S

St

W1

W2

S

FIG 3

S2

S3

S1

R3

R2

R1

W3

S

St

W2

W1

S